# EUROPEAN PATENT APPLICATION

(11) **EP 2 466 734 A2**
(43) Date of publication of application: **20.06.2012**
(21) Application number: 11158559.2
(22) Date of filing: 16.03.2011
(51) Int. Cl.: H02K 21/24, H02K 3/47

(54) **Electric Motor**

(30) Priority: 16.12.2010 TW 099224417
(71) Applicant: Wealth Marching International Limited, Sanchong City T'ai pei 241 (TW)
(72) Inventor: Song, Ta-Chun, 241, Taipei County (TW); Yang, Kuang-Nan, 241, Taipei County (TW)
(74) Representative: Lang, Christian

(57) **Abstract**

An electric motor includes a stator and a rotor. The stator includes a stationary shell, a polymer element located in the stationary shell, a coil unit located in the polymer element, two covers each connected to a related one of two opposite sides of the stationary shell, two caps each attached to a related one of the covers, and two bearings each fit in a related one of the caps. The rotor includes an axle inserted through the coil unit and supported on the bearings, two shields each connected to a related one of two opposite sides of the axle, and two groups of magnets. Each of the groups of magnets is connected to a related one of the shields.

## Description

### BACKGROUND OF INVENTION

### 1. FIELD OF INVENTION

The present invention relates to an electric motor and, more particularly, to a simple, small, light, efficient and iron core-free electric motor with little loss of copper and little mechanical loss in operation.

### 2. RELATED PRIOR ART

A conventional electric motor includes a stationary shell, an axle, a rotary shell, a transmission unit, a rotor and coils. The stationary shell includes two opposite openings. An electricity output unit is located in and connected to the stationary shell. The rotary shell is rotationally located in the stationary shell. The rotary shell includes two opposite openings. An electricity output ring is located in and connected to the rotary shell. The electricity output ring is in contact with the electricity output unit for transmission of electricity. The axle is supported on two bearings each fit in a related one of the apertures of a related one of the stationary and rotary shells. The transmission unit includes first and second gears and an internally toothed ring. The internally toothed ring is located in and attached to the rotary shell. The first gear is connected to the axle. The second gear is located in and pivotally connected to the stationary shell. The second gear is engaged with the first gear on one hand and engaged with the internally toothed ring on the other hand. When the axle spins in a direction, the rotary shell spins in an opposite direction because of the transmission unit. The rotor is connected to a section of the axle in the rotary shell. Magnets are attached to the rotor. The coils are located in and connected to the rotary shell corresponding to the magnets connected to the rotor. The conventional electric motor generates electricity as the axle is spun.

The conventional electric motor includes brushes and iron cores. Hence, there is considerable loss of copper and considerable mechanical loss. In addition, the conventional electric motor is complicated structurally. Moreover, the conventional electric motor cannot be operated at high speed and high efficiency.

The present invention is therefore intended to obviate or at least alleviate the problems encountered in prior art.

### SUMMARY OF INVENTION

It is an objective of the present invention to provide an electric motor that can be operated at high speed and efficiency.

It is another objective of the present invention to provide an electric motor that can be operated without loss related to an iron-core.

It is another objective of the present invention to provide an electric motor that can be operated with little loss of copper and mechanical loss.

To achieve the foregoing objectives, the electric motor includes a stator and a rotor. The stator includes a stationary shell, a polymer element located in the stationary shell, a coil unit located in the polymer element, two covers each connected to a related one of two opposite sides of the stationary shell, two caps each attached to a related one of the covers, and two bearings each fit in a related one of the caps. The rotor includes an axle inserted through the coil unit and supported on the bearings, two shields each connected to a related one of two opposite sides of the axle, and two groups of magnets. Each of the groups of magnets is connected to a related one of the shields.

Other objectives, advantages and features of the present invention will be apparent from the following description referring to the attached drawings.

### BRIEF DESCRIPTION OF DRAWINGS

The present invention will be described via detailed illustration of the preferred embodiment referring to the drawings wherein:
FIG. 1 is a front view of an electric motor according to the preferred embodiment of the present invention;
FIG. 2 is a cross-sectional view of the electric motor shown in FIG. 1; and
FIG. 3 is an exploded view of the electric motor shown in FIG. 2.

### DETAILED DESCRIPTION OF PREFERRED EMBODIMENT

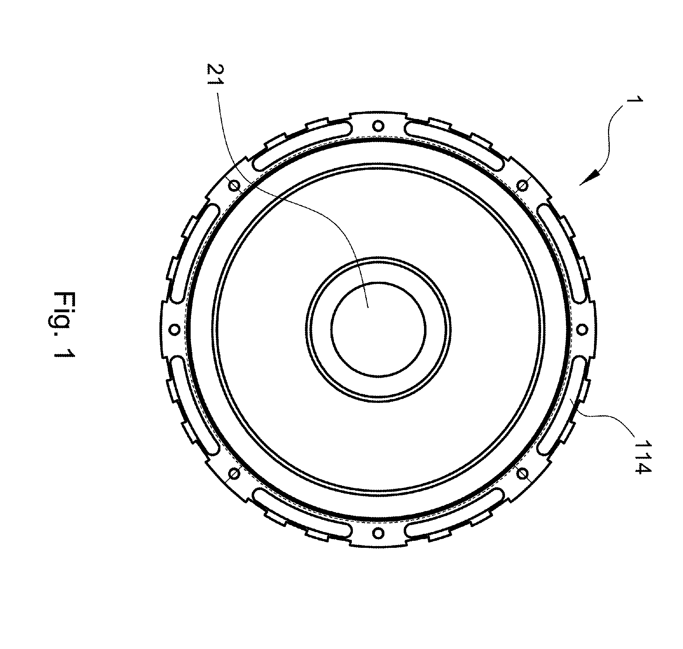

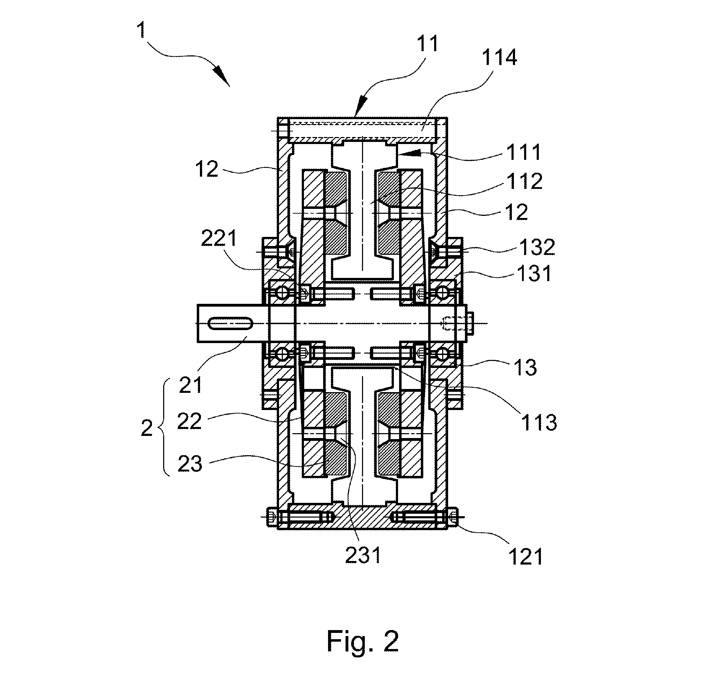

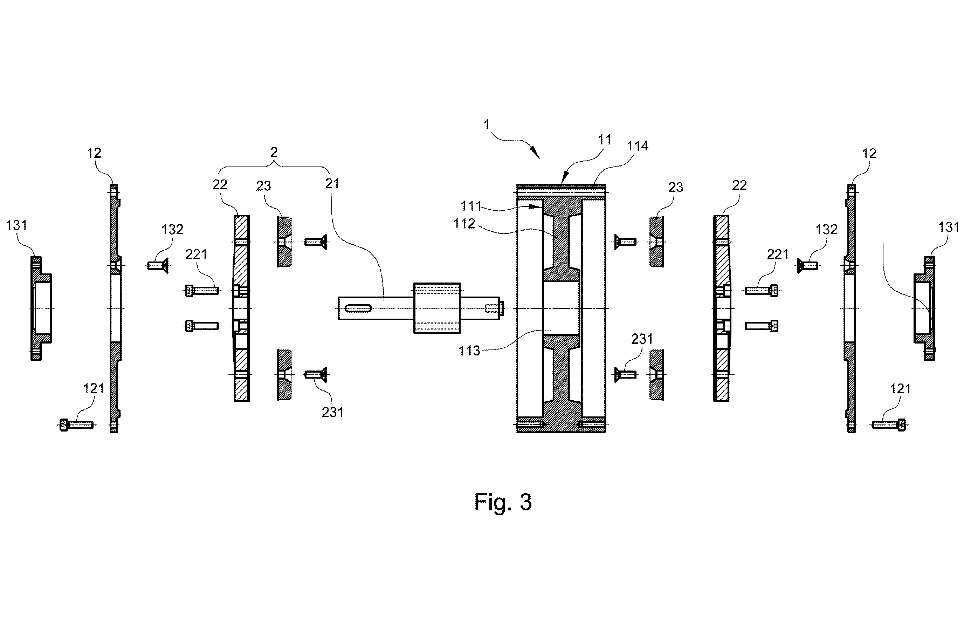

Referring to FIGS. 1 to 3, an electric motor includes a stator 1 and a rotor 2 according to the preferred embodiment of the present invention. The stator 1 includes a stationary shell 11, two covers 12 and two bearings 13. The stationary shell 11 includes an axial aperture 113 defined therein and radiating channels 114 defined therein. A polymer element 111 is located in the stationary shell 11. The polymer element 111 and the stationary shell 11 are preferably made one, i.e., the polymer element 111 and the stationary shell 11 are made of a same polymer respectively as disk-like and drum-like portions of a structure. A coil unit 112 is located in the polymer element 111. The coil unit 112 is preferably embedded in the polymer element 111.

The rotor 2 includes an axle 21, two shields 22 and magnets 23. The axle 21 includes a middle section extending between two terminal sections. The diameter of the middle section is larger than the diameter of the terminal sections. The axle 21 is inserted through the axial aperture 113 of the stationary shell 11. The magnets 23 are divided into two groups. Each group of magnets 23 is attached to a related shield 22. Each of the magnets 23 is attached to a related one of the shields 22 by a screw 231. Each of the shields 22 is attached to a related one of two opposite sides of the middle section of the axle 21 by screws 221.

Each of the bearings 13 is fit in a cap 131. Each of the caps 131 is attached to a related one of the covers 12 by screws 132. Then, each of the covers 12 is attached to a related one of two opposite sides of the stationary shell 11 by screws 121. Each of the terminal sections of the axle 21 is inserted through and supported on a related one of the bearings 13.

In use, electricity is provided to the coil unit 112 of the stator 1. The coil unit 112 continuously generates magnetism in a phase that is repulsive to that of the magnets 23. Thus, the rotor 2 spins in the stator 1 as the terminal sections of the axle 21 are supported on the bearings 13. The radiating channels 114 defined in the stationary shell 11 are used to radiate heat generated in the operation of the electric motor. Thus, the electric motor can be operated at high speed and efficiency, without loss related to an iron-core, with little loss of copper and mechanical loss.

The present invention has been described via the detailed illustration of the preferred embodiment. Those skilled in the art can derive variations from the preferred embodiment without departing from the scope of the present invention. Therefore, the preferred embodiment shall not limit the scope of the present invention defined in the claims.

## Claims

1. An electric motor including:
a stator 1 including:
a stationary shell 11;
a polymer element 111 located in the stationary shell 11;
a coil unit 112 located in the polymer element 111;
two covers 12 each connected to a related one of two opposite sides of the stationary shell 11;
two caps 131 each attached to a related one of the covers 12; and
two bearings 13 each fit in a related one of the caps 131; and
a rotor 2 including:
an axle 21 inserted through the coil unit 112 and supported on the bearings 13;
two shields 22 each connected to a related one of two opposite sides of the axle 21; and
two groups of magnets 23, wherein each of the groups of magnets 23 is connected to a related one of the shields 22.

2. The electric motor according to claim 1, wherein the stationary shell 11 includes radiating channels 114 defined therein.

3. The electric motor according to claim 1, wherein the coil unit 112 is embedded in the polymer element 111.

4. The electric motor according to claim 3, wherein the polymer element 111 includes an axial aperture 113 through which the axle 21 is inserted.

5. The electric motor according to claim 1, wherein the stator 1 further includes screws 121 for securing the covers 12 to the stationary shell 11.

6. The electric motor according to claim 1, wherein the stator 1 further includes screws 132 for securing the caps to the covers 12.

7. The electric motor according to claim 1, wherein the rotor 2 further includes screws 221 for securing the shields 22 to the axle 21.

8. The electric motor according to claim 1, wherein the rotor 2 further includes screws 231 for securing the magnets 23 to the shields 22.
